# EUROPÄISCHE PATENTANMELDUNG

(11) **EP 1 672 252 A2**
(43) Veröffentlichungstag der Anmeldung: **21.06.2006**
(21) Anmeldenummer: 05111897.4
(22) Anmeldetag: 09.12.2005
(51) Int. Cl.: F16H 59/20

(54) **Kick-Down Element für Fahrpedalgeber**

(30) Priorität: 16.12.2004 DE 102004060482
(71) Anmelder: Hella KGaA Hueck & Co., 59552 Lippstadt (DE)
(72) Erfinder: Berglar, Heinrich, 59510 Lippetal (DE); Bölts, Jan, 59556 Lippstadt (DE)

(57) **Zusammenfassung**

Vorgeschlagen wird ein Kick-Down Element für einen Fahrpedalgeber, umfassend einen Träger (1) und ein gegenüber dem Träger (1) verschiebbar angeordnetes Gehäuse (2), wobei zwischen dem Träger (1) und dem Gehäuse (2) eine Anordnung zur Erzeugung eines Kraftsprunges aus einem erstem Arm (4) und einem zweitem Arm (5) mit einer zugeordneten ersten Andruckfläche (7) und einer zugeordneten zweiten Andruckfläche (8) vorgesehen ist, wobei die Andruckflächen (7,8) zur Zuordnung unterschiedlicher Aufgaben unterschiedliche Konturen aufweisen, sowie ein Träger (1) für ein Kick-Down Element, umfassend mindestens einen Arm (4,5), der über ein Gleitlager (6) schwenkbar an dem Träger (1) angeordnet werden kann, wobei der Arm (4,5) und der Träger (1) einstückig ausgebildet sind, wobei eine Sollbruchstelle (10) zwischen dem Träger (1) und dem Arm (4, 5) vorgesehen ist, sowie ein Verfahren zur Montage eines Trägers (1), bei dem die Sollbruchstellen (10) durch Einschieben des Trägers (1) in das Gehäuse (2) aufgebrochen werden können.

## Beschreibung

Die vorliegende Erfindung betrifft ein Kick-Down Element für einen Fahrpedalgeber gemäß dem Oberbegriff des Anspruchs 1, sowie einen Träger für ein Kick-Down Element gemäß dem Oberbegriff des Anspruchs 7, sowie ein Verfahren zur Montage eines Trägers nach Anspruch 9.

### STAND DER TECHNIK

Ein Kick-Down Element für einen Fahrpedalgeber ist bereits aus der DE 102 50 966 A1 bekannt geworden. Hier wird ein Kick-Down Element offenbart, welches einen Träger und eine Feder aufweist, wobei an der Grundfläche des Trägers bewegliche, sich senkrecht zur Grundfläche erstreckende Arme angeformt sind und der Träger durch ein Gehäuse abgeschlossen ist, wobei die beweglichen Arme mittels der Feder an Andruckflächen des Gehäuses vorgespannt sind.

Die Andruckflächen sind mit einer sich verjüngenden Kontur ausgestattet, welche die Arme zusammendrücken kann, falls der Träger in das Gehäuse eingerückt wird. Entsprechend der Ausgestaltung der Kontur der Andruckflächen, beispielsweise durch eine angeformte Nase, kann ein Kraftsprung erzeugt werden, der dem Fahrer den sogenannten "Kick-Down Punkt" anzeigt.

Es ist jedoch von Nachteil, dass die Arme durch schiefes Auftreffen auf die Andruckflächen zu unterschiedlichen Zeiten verschwenkt werden, wodurch die Arme letztendlich verkanten. Diesem Nachteil kann zwar mit einem hohen Maß an Genauigkeit und engen Lagetoleranzen begegnet werden. Jedoch ergibt sich hieraus ein hoher Montageaufwand und letztendlich hohe Kosten.

Hier setzt die vorliegende Erfindung an und macht es sich zur Aufgabe ein Kick-Down Element bereitzustellen, welches unempfindlich gegenüber Lagetoleranzen ist und bei dem ein Verkanten der Arme ausgeschlossen werden kann.

### VORTEILE DER ERFINDUNG

Erfindungsgemäß wird diese Aufgabe durch ein Kick-Down Element mit den kennzeichnenden Merkmalen des Anspruchs 1 gelöst. Dadurch, dass die Andruckflächen unterschiedliche Konturen aufweisen, können den Andruckflächen unterschiedliche Aufgaben zugewiesen werden. Beispielsweise kann lediglich die zweite Andruckfläche mit einer für die Bereitstellung des Kraftsprungs geeigneten Kontur ausgestattet sein. Dementsprechend wird die Kraft nur von einem Arm aufgenommen und ein Verkanten ist grundsätzlich nicht mehr möglich.

In einer vorteilhaften Ausgestaltung der vorliegenden Erfindung kann vorgesehen sein, dass die erste Andruckfläche mit einer für die Rückstellung des Kick-Down Elements geeigneten Kontur ausgestattet ist. Dementsprechend muss kein zusätzliches Rückstellungselement vorgesehen werden, wodurch eine sehr kompakte Bauform erreicht werden kann.

Eine vorteilhafte Ausgestaltung der zweiten Andruckfläche stellt die Kontur einer überdeckenden Geometrie dar. Hierdurch kann eine geeignete Auslenkung des zugeordneten Armes sichergestellt werden, wodurch sich der für ein Kick-Down Element typische Kraftverlauf erzeugen lässt.

In einer vorteilhaften Ausgestaltung der vorliegenden Erfindung kann vorgesehen sein, dass eine Feder zwischen den Armen angeordnet ist. Hierdurch kann die für den Kraftsprung und die Rückstellung notwendige Kraft durch einen separaten Energiespeicher bereitgestellt werden. Denkbar ist ggf. auch eine geeignete Ausgestaltung der Arme, beispielsweise aus einem federnden Material.

In einer weiteren vorteilhaften Weiterbildung der vorliegenden Erfindung kann vorgesehen sein, dass mindestens ein Arm über Gleitlager mit dem Träger verbunden ist. Dementsprechend kann die geforderte Schwenkbewegung der Arme in vorteilhafter Form durchgeführt werden.

Es kann ebenfalls vorgesehen sein, dass mindestens ein Arm über ein Filmscharnier mit dem Träger verbunden ist. Hierdurch wird die Toleranzkette um ein weiteres Teil reduziert, so dass die Montage noch eindeutiger und der Träger eine feste Position gegenüber den Armen einnehmen kann. Auch werden Geräusche, die durch das Aufeinandergleiten gleicher Kunststoffe entstehen können, vermieden.

Eine weitere Aufgabe der vorliegenden Erfindung liegt darin, einen Träger und zugeordnete Arme für ein Kick-Down Element bereitzustellen, die preiswert hergestellt werden können.

Erfindungsgemäß wird diese Aufgabe dadurch gelöst, dass der Träger und die Arme einstückig ausgebildet sind, wobei eine Sollbruchstelle zwischen dem Träger und den Armen vorgesehen ist. Eine derartige Ausgestaltung des Trägers eignet sich besonders gut für eine rationelle Fertigung, da der Träger und die Arme in einem Produktionsschritt hergestellt werden können.

Eine weitere Aufgabe der vorliegenden Erfindung liegt darin, ein Verfahren zur Montage eines erfindungsgemäßen Trägers vorzuschlagen, welche mit einem geringen Montageaufwand durch geführt werden kann.

Erfindungsgemäß wird diese Aufgabe dadurch gelöst, dass die Sollbruchstellen durch Einschieben des Trägers in das Gehäuse aufgebrochen werden können. Dementsprechend kann der Träger zusammen mit den Armen in einem Arbeitsgang montiert werden.

In einer weiteren Ausgestaltung des vorliegenden Verfahrens kann vorgesehen sein, dass die Arme nach dem Aufbrechen der Sollbruchstellen in die Gleitlagerung aufgenommen werden. Dementsprechend kann eine ebenfalls aufwendige Positionierung der Arme entfallen.

### ZEICHNUNGEN

Weitere Merkmale und Vorteile der vorliegenden Erfindung werden deutlich anhand nachfolgender Beschreibung einer bevorzugten Ausführungsform unter Bezugnahme auf die anliegenden Zeichnungen. Darin zeigen
- Fig. 1: eine geschnittene Darstellung eines erfindungsgemäßen Kick-Down Elements;
- Fig. 2: eine geschnittene Darstellung einer weiteren Ausführungsform eines erfindungsgemäßen Kick-Down Elements;
- Fig. 3: eine perspektivische Ansicht eines erfindungsgemäßen Kick-Down Elements in einem Vormontagezustand;
- Fig. 4: eine perspektivische Ansicht eines erfindungsgemäßen Kick-Down Elements;
- Fig. 5: eine geschnittene Ansicht eines erfindungsgemäßen Trägers;

### BESCHREIBUNG DER AUSFÜHRUNGSBEISPIELE

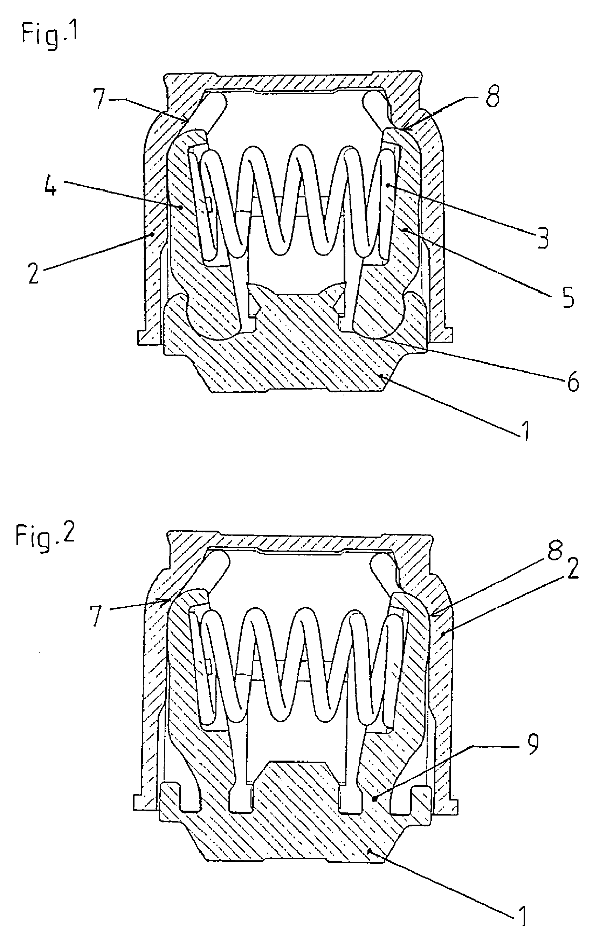

Zunächst wird auf Fig. 1 Bezug genommen.

Ein erfindungsgemäßes Kick-Down Element umfasst im Wesentlichen einen Träger 1, sowie ein den Träger 1 aufnehmendes einseitig geöffnetes kastenförmiges Gehäuse 2.

Der Träger 1 ist verschiebbar innerhalb des Gehäuses 2 angeordnet und mit zwei im wesentlichen senkrecht zu dem Träger 1 angeordneten beweglichen Armen 4, 5 ausgestattet. Die Arme 4, 5 sind trägerseitig über Gleitlager 6 mit dem Träger 1 verbunden und auf der dem Gleitlager 6 abgewandten Ende in gehäuseseitigen Andruckfläche 7, 8 geführt. Weiterhin ist eine Feder 3 zwischen den Armen 4, 5 angebracht, welche die Arme 4, 5 gegen die Andruckfläche 7, 8 drückt.

Das Kick-Down Element ist vorzugsweise in einer Gaspedaleinrichtung eines mit einem Automatikgetriebe ausgestatteten Kraftfahrzeug angebracht. Durch einen sogenannten "Kick-Down" des Gaspedals wird der Träger 1 in das Gehäuse 2 gedrückt, wodurch die Arme 4, 5 entsprechend der Ausgestaltung der Andruckfläche 7, 8 gegen die Kraft der Feder 3 einschwenken. Durch eine geeignete Ausgestaltung der Andruckfläche 7, 8 wird eine Gegenkraft in Form eines Kraftsprunges erzeugt, durch den der sogenannte "Kick-Down Punkt" für den Fahrer wahrgenommen werden kann.

Erfindungsgemäß ist vorgesehen, dass die Andruckflächen 7, 8 unterschiedliche Konturen aufweisen. In der hier vorgeschlagenen bevorzugten Ausführungsform ist die erste Andruckfläche 7 zumindest abschnittsweise als Rampe ausgebildet. Durch diese Kontur wird eine Rückstellkraft erzeugt, welche das Kick-Down Element in seine Ausgangslage vor dem "Kick-Down" zurückversetzt. Andererseits ist die zweite Andruckfläche 8 zumindest abschnittsweise als überdeckende Geometrie ausgestaltet. Die überdeckende Geometrie ist in diesem Zusammenhang als Nase zu verstehen, welche in den Verfahrweg der Arme 4, 5 hineinragt, zumindest aber so ausgestaltet ist, dass ein für den "Kick-Down" bekannter Kraftverlauf erzeugt werden kann. Dementsprechend wird die für den "Kick-Down" benötigte Gegenkraft im Wesentlichen von lediglich einer Paarung - Arm 5 und Andruckfläche 8 - erzeugt, so dass keine Gefahr mehr besteht, dass durch schiefes Auftreffen eines Armes 4, 5 auf einer Andruckfläche 7, 8 eine Seite eher die Einschwenkbewegung beginnt und die Arme 4, 5 verkanten.

Auch kann die Feder 3 im Gegensatz zu den bekannten Kick-Down Elementen zwei Funktionen übernehmen. Einerseits wird durch die Geometrie der zweiten Andruckfläche 8 ein Kraftsprung erzeugt, andererseits kann die Federkraft, durch die Ausgestaltung der ersten Andruckfläche 7 als Schräge, für die Rückstellung des Trägers 1 in eine Ausgangsposition genutzt werden.

In der Fig. 2 ist eine alternative Ausgestaltung des Kick-Down Elements dargestellt, bei dem die Lager als Filmscharniere 9 ausgestaltet sind. Hierdurch wird die Toleranzkette um ein weiteres Teil reduziert, so dass die Montage noch eindeutiger und der Träger 1 eine feste Position gegenüber den Armen 4, 5 einnehmen kann. Auch werden Geräusche, die durch das Aufeinandergleiten gleicher Kunststoffe entstehen können, vermieden.

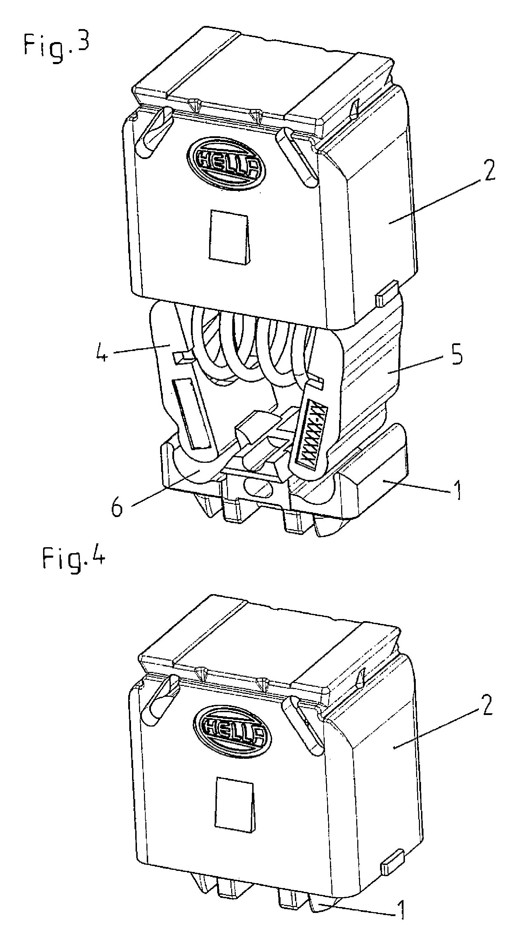

Fig. 3 und 4 zeigen jeweils zu illustrativen Zwecken eine perspektivische Ansicht auf ein erfindungsgemäßes Kick-Down Element in einem Vormontagezustand (Fig. 3) und einem montierten Zustand (Fig. 4).

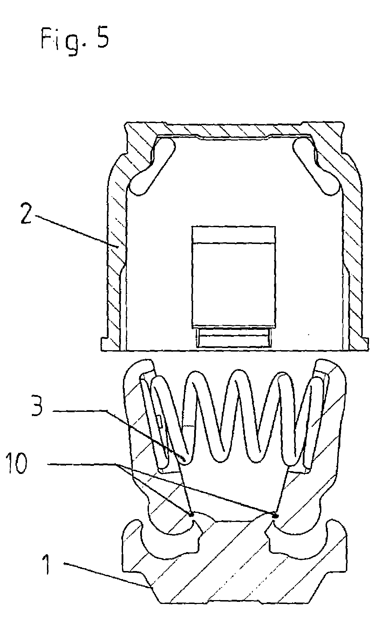

In Fig. 5 ist ein erfindungsgemäßer Träger 1 dargestellt, der einstückig mit Armen 4, 5 ausgebildet ist, wobei Sollbruchstellen 10 zwischen den Armen 4, 5 und dem Träger 1 vorgesehen sind. Der Träger 1 befindet sich hier in einem Vormontagezustand, d.h. in einem Zustand nach einem geeigneten Produktionsprozess. Zum Einbau in ein Kick-Down Element ist vorgesehen, dass der Träger 1 in dem oben beschriebenen Vormontagezustand, ggf. mit bereits eingebauter Feder 3, in das Gehäuse 2 eingeschoben wird. Durch das Einschieben des Trägers 1 werden die Arme 4, 5 gebogen und die Sollbruchstellen 10 brechen auf. Anschließend rutschen die Arme 4, 5 in die vorgesehenen Gleitlager 6 und das Kick-Down Element ist betriebsbereit. Alternativ können die Arme 4, 5 selbstverständlich auch manuell abgetrennt werden.

## Patentansprüche

1. Kick-Down Element für einen Fahrpedalgeber, umfassend einen Träger (1) und ein gegenüber dem Träger (1) verschiebbar angeordnetes Gehäuse (2), wobei zwischen dem Träger (1) und dem Gehäuse (2) eine Anordnung zur Erzeugung eines Kraftsprunges aus einem erstem Arm (4) und einem zweitem Arm (5) mit einer zugeordneten ersten Andruckfläche (7) und einer zugeordneten zweiten Andruckfläche (8) vorgesehen ist, **dadurch gekennzeichnet, dass** die Andruckflächen (7, 8) unterschiedliche Konturen aufweisen.

2. Kick-Down Element nach Anspruch 1, **dadurch gekennzeichnet, dass** die erste Andruckfläche (7) als Rampe ausgebildet ist.

3. Kick-Down Element nach einem der vorhergehenden Ansprüche, **dadurch gekennzeichnet, dass** die zweite Andruckfläche (8) als überdeckende Geometrie ausgebildet ist.

4. Kick-Down Element nach einem der vorhergehenden Ansprüche, **dadurch gekennzeichnet, dass** eine Feder (3) zwischen den Armen (4, 5) angeordnet ist.

5. Kick-Down Element nach einem der vorhergehenden Ansprüche, **dadurch gekennzeichnet, dass** mindestens ein Arm (4, 5) über Gleitlager mit dem Träger (1) verbunden ist.

6. Kick-Down Element nach einem der vorhergehenden Ansprüche, **dadurch gekennzeichnet, dass** mindestens ein Arm (4, 5) über ein Filmscharnier (9) mit dem Träger (1) verbunden ist.

7. Träger (1) für ein Kick-Down Element, umfassend mindestens einen Arm (4, 5), der über ein Gleitlager (6) schwenkbar an dem Träger (1) angeordnet werden kann, **dadurch gekennzeichnet, dass** der Arm (4, 5) und der Träger (1) einstückig ausgebildet sind, wobei eine Sollbruchstelle (10) zwischen dem Träger (1) und dem Arm (4, 5) vorgesehen ist.

8. Träger nach Anspruch 6**, dadurch gekennzeichnet, dass** es sich um ein Kick-Down Element gemäß einem der Ansprüche 1 bis 6 handelt.

9. Verfahren zur Montage eines Trägers (1) gemäß einen der Ansprüche 7 oder 8, **dadurch gekennzeichnet, dass** die Sollbruchstellen (10) durch Einschieben des Trägers (1) in das Gehäuse (2) aufgebrochen werden können.

10. Verfahren nach Anspruch 9, **dadurch gekennzeichnet, dass** die Arme (4, 5) nach dem Aufbrechen der Sollbruchstellen (10) in die Gleitlagerung (6) aufgenommen werden.
